(19) Europäisches Patentamt
European Patent Office
Office européen des brevets

(11) Veröffentlichungsnummer: **0 312 929**
**A2**

(12) **EUROPÄISCHE PATENTANMELDUNG**

(21) Anmeldenummer: **88117104.5**

(51) Int. Cl.⁴: **C08L 69/00 , C08L 51/00**

(22) Anmeldetag: **14.10.88**

(30) Priorität: **22.10.87 DE 3735754**

(43) Veröffentlichungstag der Anmeldung: **26.04.89 Patentblatt 89/17**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Muehlbach, Klaus, Dr.**
**Dr.-Heinrich-Winter-Strasse 19**
**D-6148 Heppenheim(DE)**
Erfinder: **Portugall, Michael, Dr.**
**7 Raiffeisenstrasse**
**D-6706 Wachenheim(DE)**
Erfinder: **Ruppmich, Karl**
**Koenigsbacher Strasse 134**
**D-6700 Ludwigshafen(DE)**
Erfinder: **Seiler, Erhard, Dr.**
**Erpolzheimer Strasse 1**
**D-6700 Ludwigshafen(DE)**
Erfinder: **Brandt, Hermann, Dr.**
**Keltenstrasse 30**
**D-6707 Schifferstadt(DE)**

(54) **Thermoplastische Formmasse, Verfahren zu ihrer Herstellung und deren Verwendung.**

(57) Die Erfindung betrifft daher eine thermoplastische Formmasse, enthaltend, jeweils bezogen auf die Formmasse aus A + B,

A 30 bis 80 Gew.% eines Polycarbonates

B 70 bis 20 Gew.% einer Mischung aus zwei unterschiedlichen Komponenten $B_1$ und $B_2$ die jweils aus mindestens einem Pfropfmischpolymerisat $b_{11}$ und $b_{21}$ und jeweils mindestens aus einem Copolymerisat (Hartmatrix) $b_{12}$ bzw. $b_{22}$ bestehen, wobei das Pfropfmischpolymerisat $b_{11}$ in Emulsion und das Pfropfmischpolymerisat $b_{21}$ auf anderem Wege hergestellt ist, charakterisiert ist,

daß die Komponente $B_1$, bezogen auf B, 20 bis 80 Gew.% ausmacht und, bezogen auf $B_1$, 20 bis 60 Gew.% des Pfropfmischpolymerisates $b_{11}$ und 80 bis 40 Gew.% des Copolymerisates $b_{12}$ enthält,

wobei das Pfropfmischpolymerisat $b_{11}$ durch Emulsionspolymerisation von 20 bis 60 Gew.-Teilen eines Gemisches von mindestens einem vinylaromatischen Monomeren mit 8 bis 12 C-Atomen, MMA oder Mischungen daraus und (Meth)acrylnitril oder MMA im Gewichtsverhältnis 50:50 bis 95:5 auf 80 bis 40 Gew.-Teilen eines in Emulsion gewonnenen Latex eines Elastomeren (Kautschuks) hergestellt wird, dessen Teilchen einen mittleren Durchmesser von 0,05 bis 0,5 µm ($d_{50}$-Wert der Masseverteilung) aufweisen

und wobei

EP 0 312 929 A2

das Copolymerisat $b_{12}$, bezogen auf $b_{12}$, 50 bis 95 Gew.% mindestens eines vinylaromatischen Monomeren mit 8 bis 12 C-Atomen, MMA oder Mischungen daraus und 50 bis 5 Gew.% (Meth)acrylnitril oder MMA einpolymerisiert enthält,

ferner gekennzeichnet dadurch, daß die Komponente $B_2$, bezogen auf B, 80 bis 20 Gew.% ausmacht, und, bezogen auf $B_2$, 5 bis 35 Gew.% des Pfropfmischpolymerisates $b_{21}$ und 95 bis 65 Gew.% des Copolymerisates $b_{22}$ enthält,

wobei das Pfropfmischpolymerisat $b_{21}$ und das Copolymere $b_{22}$ gleichzeitig durch Polymerisation von 100 Gew.-Teilen einer Mischung aus mindestens einem vinylaromatischen Monomeren mit 8 bis 12 C-Atomen, MMA oder Mischungen daraus und (Meth)acrylnitril oder MMA im Gewichtsverhältnis 50:50 bis 95:5 in Gegenwart von 3 bis 33 Gew.-Teilen eines Elastomeren in Masse, oder gegebenenfalls zusätzlich in Gegenwart eines Lösungsmittels, oder in Masse-Suspension hergestellt wird, so daß danach der mittlere Teilchendurchmesser der resultierenden Teilchen aus der Pfropfung im Bereich von 0,8 bis 5 $\mu$ liegt,

und wobei das Copolymerisat $b_{22}$, bezogen auf $b_{22}$, 50 bis 95 Gew.% mindestens eines vinylaromatischen Monomeren mit 8 bis 12 C-Atomen, MMA oder Mischungen daraus und 50 bis 5 Gew.% (Meth)acrylnitril oder MMA einpolymerisiert enthält,

mit der Maßgabe, daß der Gesamtelastomergehalt aus $B_1$ und $B_2$, bezogen auf B, 10 bis 25 Gew.% beträgt bei einem Gewichtsverhältnis der Elastomerengehalte von 95:5 bis 55:45 für $B_1:B_2$.

# Thermoplastische Formmasse, Verfahren zu ihrer Herstellung und deren Verwendung

Die Erfindung betrifft eine thermoplastische Formmasse enthaltend, jeweils bezogen auf die Formmasse aus A + B,

A 30 bis 80 Gew.% mindestens eines Polycarbonates

B 70 bis 20 Gew.% einer Mischung aus zwei unterschiedlichen Komponenten $B_1$ und $B_2$ die jeweils aus mindestens einem Pfropfmischpolymerisat $b_{11}$ und $b_{21}$ und jeweils mindestens aus einem Copolymerisat (Hartmatrix) $b_{12}$ bzw. $b_{22}$ bestehen, wobei das Pfropfmischpolymerisat $b_{11}$ in Emulsion und das Pfropfmischpolymerisat $b_{21}$ auf anderem Wege hergestellt ist.

Zum Stand der Technik nennen wird

(1) DE-OS 35 21 407

(2) EP-PS 5 202

(3) US-PS 4 526 926

(4) EP-PS 80 767

(5) EP-PS 190 884 und

(6) US-PS 4 430 478

In (1) sind Mischungen aus PC und 2. Pfropfmischpolymerisaten sowie die Hartmatrix bildende Copolymerisate beschrieben, wobei die Pfropfmischpolymerisate in Masse oder Emulsion erzeugt sein können, mittlere Teilchendurchmesser von 0,09 bis 5 µm aufweisen aber unterschiedlichen Pfropfgrad aufweisen.

Aus (2) sind Formmassen aus PC und 2 Pfropfmischpolymerisaten im Teilchenbereich 0,1 bis 2 µm bekannt, wobei letztere Pfropfgrade von 0,2 bis 0,5 bzw. von 0,7 bis 0,9 besitzen und überwiegend in Emulsion hergestellt werden.

In (3) sind PC/ABS-Formmassen beschrieben, deren Weichphase Teilchen von > 0,5 µm aufweist. Das Pfropfcopolymerisat kann in Masse oder Emulsion unter Agglomeration hergestellt sein; es können auch Mischungen von in Emulsion und Masse hergestelltem ABS verwendet werden.

In (4) schließlich sind PC/ABS-Formmassen beschrieben, deren Weichphase einen mittleren Teilchendurchmesser von 0,09 bis 0,7 µm aufweisen soll. Das Pfropfmischpolymerisat (die Weichphase) kann dabei in Emulsion oder Masse erzeugt werden.

In (5) und (6) sind jeweils polycarbonatfreie ABS-Formmassen beschrieben, die einen Lösungs-ABS-Anteil und andererseits einen Emulsionsanteil enthalten, wobei im Falle von (5) auch auf die Abmischung mit PC hingewiesen wird.

PC/ABS-Mischungen sind seit langem bekannt (vgl. DE-PS 1 170 141 und 1 810 993). ABS-PC-Blends zeichnen sich in der Regel durch gute mechanische Eigenschaften, insbesondere gute axiale und multiaxiale Zähigkeiten bis zu tiefen Temperaturen und hohe Vicat-Temperaturen aus. Die Haupteinsatzgebiete sind der Kfz-Sektor, sowie die Elektro- und Haushaltsgeräteindustrie. Die Anforderungen an die Materialien umfassen hohe Zähigkeit - auch bei tiefen Temperaturen -, leichte Verarbeitbarkeit - insbesondere bei kompliziert geformten Werkstücken - sowie ausgezeichnete Oberflächeneigenschaften.

Die bekannten Mischungen aus ABS und PC erfüllen je nach Aufbau und Zusammensetzung die Anforderungen nur teilweise:

So zeigen Mischungen aus PC und Lösungs-ABS gute Fließeigenschaften und Zähigkeit aber nur eine geringe Kerbschlagzähigkeit bei -40 °C und geringen Glanz.

Mischungen aus PC und Emulsions-ABS weisen eine gute Zähigkeit und einen guten Glanz bei geringer Fließfähigkeit auf.

Es bestand daher die Aufgabe Mischungen von Pfropfmischpolymerisaten, insbesondere auf Basis ABS mit PC vorzuschlagen, die jeweils eine gute Zähigkeit als auch gute Fließfähigkeit und hohen Glanz bei guter Witterungsbeständigkeit besitzen.

Die Lösung dieser Aufgabe gelingt mit einer Formmasse gemäß Patentanspruch 1.

Die Erfindung betrifft daher eine thermoplastische Formmasse, enthaltend, jeweils bezogen auf die Formmasse aus A + B,

A 30 bis 80 Gew.% mindestens eines Polycarbonates

B 70 bis 20 Gew.% einer Mischung aus zwei unterschiedlichen Komponenten $B_1$ und $B_2$ die jweils aus mindestens einem Pfropfmischpolymerisat $b_{11}$ und $b_{21}$ und jeweils mindestens aus einem Copolymerisat (Hartmatrix) $b_{12}$ bzw. $b_{22}$ bestehen, wobei das Pfropfmischpolymerisat $b_{11}$ in Emulsion und das Pfropfmischpolymerisat $b_{21}$ auf anderem Wege hergestellt ist.

Die Formmasse ist dadurch gekennzeichnet, daß die Komponente $B_1$, bezogen auf B, 20 bis 80 Gew.%

ausmacht und, bezogen auf $B_1$, 20 bis 60 Gew.% des Pfropfmischpolymerisates $b_{11}$ und 80 bis 40 Gew.% des Copolymerisates $b_{12}$ enthält,
wobei das Pfropfmischpolymerisat $b_{11}$ durch Emulsionspolymerisation von 20 bis 60 Gew.-Teilen eines Gemisches von mindestens einem vinylaromatischen Monomeren mit 8 bis 12 C-Atomen oder MMA und von (Meth)acrylnitril im Gewichtsverhältnis 50:50 bis 95:5 auf 80 bis 40 Gew.-Teile eines in Emulsion gewonnenen Latex eines Elastomeren (Kautschuks) hergestellt wird, dessen Teilchen einen mittleren Durchmesser von 0,05 bis 0,5 µm ($d_{50}$-Wert der Masseverteilung) aufweisen
und wobei
das Copolymerisat $b_{12}$, bezogen auf $b_{12}$, 50 bis 95 Gew.% mindestens eines vinylaromatischen Monomeren mit 8 bis 12 C-Atomen oder MMA oder Mischungen daraus und 50 bis 5 Gew.% (Meth)acrylnitril oder MMA einpolymerisiert enthält,
ferner gekennzeichnet dadurch, daß die Komponente $B_2$, bezogen auf B, 80 bis 20 Gew.% ausmacht, und, bezogen auf $B_2$, 5 bis 35 Gew.% des Pfropfmischpolymerisates $b_{21}$ und 95 bis 65 Gew.% des Copolymerisates $b_{22}$ enthält,
wobei das Pfropfmischpolymerisat $b_{21}$ und das Copolymere $b_{22}$ gleichzeitig durch Polymerisation von 100 Gew.-Teilen einer Mischung aus mindestens einem vinylaromatischen Monomeren mit 8 bis 12 C-Atomen oder MMA oder Mischungen davon und (Meth)acrylnitril oder MMA im Gewichtsverhältnis 50:50 bis 95:5 in Gegenwart von 3 bis 33 Gew.-Teilen eines Elastomeren in Masse, oder gegebenenfalls zusätzlich in Gegenwart eines Lösungsmittels, oder in Masse-Suspension hergestellt wird, so daß danach der mittlere Teilchendurchmesser der resultierenden Teilchen aus der Pfropfung im Bereich von 0,8 bis 5 µm liegt,
und wobei das Copolymerisat $b_{22}$, bezogen auf $b_{22}$, 50 bis 95 Gew.% mindestens eines vinylaromatischen Monomeren mit 8 bis 12 C-Atomen oder MMA oder Mischungen daraus und 50 bis 5 Gew.% (Meth)-acrylnitril oder MMA einpolymerisiert enthält,
mit der Maßgabe, daß der Gesamtelastomergehalt aus $B_1$ und $B_2$, bezogen auf B, 10 bis 25 Gew.% beträgt bei einem Gewichtsverhältnis der Elastomergehalte von 95:5 bis 55:45 für $B_1$:$B_2$.

Die Formmasse enthält also 2 aus unterschiedlicher Provenienz stammende Pfropfmischpolymerisate (Weichphase mindestens bimodal) mit kleinen (Emulsions-) und großen (Lösungs-)Teilchen, wobei das im Emulsionsprozeß erzeugte Pfropfmischpolymerisat mehr als 55 Gew.% Anteil an der Pfropfgrundlage (dem Gesamtelastomergehalt) ausmachen muß.

Überraschenderweise weisen trotz signifikanter Verringerung der Kautschukmenge (im Vergleich zu Mischungen aus PC und ausschließlich Emulsions-ABS) dabei die erfindungsgemäßen Formmassen ausgezeichnete Zähigkeiten auf.

Nachstehend werden der Aufbau der Formmasse aus den Komponenten, deren Herstellung und die Herstellung der Formmasse beschrieben.

Die Formmasse enthält die Komponenten A und B, insbesondere besteht sie aus diesen.

Die erfindungsgemäße Formmasse enthält folgende Anteile der Komponenten, jeweils bezogen auf A + B:
A 30 bis 80 Gew.%, vorzugsweise 40 bis 70 Gew.%
B 40 bis 20 Gew.%, vorzugsweise 30 bis 60 Gew.%.

Bezogen auf 100 Gew.-Teile der Formmasse aus A + B können noch zugegen sein:
C 0,1 bis 40 Gew.-Teile, vorzugsweise 0,1 bis 35 Gew.-Teile üblicher Zusatzstoffe.

Komponente A

Erfindungsgemäß geeignete, thermoplastische, aromatische Polycarbonate gemäß Komponente A sind solche auf Basis der Diphenole der Formel (I)

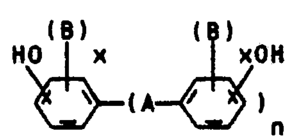

(I),

worin A eine Einfachbindung, ein $C_1$-$C_5$-Alkylen, ein $C_2$-$C_5$-Alkyliden, ein $C_5$-$C_6$-Cycloalkyliden, -S- oder -$SO_2$-, B, Chlor, Brom oder Methylgruppe, x 0, 1 oder 2 und n 1 oder 0 sind.

Erfindungsgemäß geeignete Polycarbonate gemäß Komponente A sind sowohl Homopolycarbonate als auch Copolycarbonate.

Die Diphenole der Formel (I) sind entweder literaturbekannt oder nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethyl-butyl)-phenol, gemäß DE-OS 2 842 005 oder Monoalkylphenole oder Dialkylphenole mit insgesamt 8 bis 20 C-Atomen in den Alkylsubstituenten gemäß deutscher Patentanmeldung P 35 06 472.2 (Le A 23 654), wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Die erfindungsgemäß geeignete Polycarbonate gemäß Komponente A haben mittlere Gewichtsmittelmolekulargewichte (Mw, gemessen beispielsweise durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4′-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan, 2,2-Bis-(3,5-dimethyl-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl-)propan und 1,1-Bis-(4-hydroxyphenyl)-cyclohexan.

Die erfindungsgemäß geeigneten Polycarbonate gemäß Komponente A können in bekannter Weise verzweigt sein, und zwar vorzugsweise durch den Einbau von 0,05 bis 2,0 Mol.%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 15 Mol.%, bezogen auf die Molsumme an Diphenolen, an 2,2-Bis-(3,5-dibrom-4-hydroxyphenyl)-propan.

Komponente B

Die Komponente B ist aufgebaut aus einer Mischung der Komponenten $B_1$ und $B_2$ ($B_1$ + $B_2$ = 100 %). Bezogen auf B enthält die Komponente B

$B_1$ 20 bis 80 Gew.%, vorzugsweise 40 bis 80 Gew.%, insbesondere 50 bis 75 Gew.%,

$B_2$ 80 bis 20 Gew.%, vorzugsweise 60 bis 20 Gew.%, insbesondere 50 bis 25 Gew.%.

Beide Komponenten $B_1$ und $B_2$ enthalten jeweils mindestens ein Pfropfmischpolymerisat (Weichphase) und mindestens ein Copolymerisat (Hartphase).

Die Komponente $B_1$ enthält, bezogen auf $B_1$, das Pfropfmischpolymerisat $b_{11}$ und das Copolymerisat $b_{12}$ in folgenden Anteilen:

$b_{11}$ 20 bis 60 Gew.%, vorzugsweise 25 bis 55 Gew.%, insbesondere 25 bis 50 Gew.%

$b_{12}$ 80 bis 40 Gew.%, vorzugsweise 75 bis 45 Gew.%, insbesondere 75 bis 50 Gew.%.

Die Komponente $B_2$ enthält, bezogen auf $B_2$, das Pfropfmischpolymerisat $b_{21}$ und des Copolymerisats $b_{22}$ in folgenden Anteilen:

$b_{21}$ 5 bis 35 Gew.%, insbesondere 10 bis 30 Gew.%, vorzugsweise 15 bis 25 Gew.%

$b_{22}$ 95 bis 65 Gew.%, insbesondere 90 bis 70 Gew.%, vorzugsweise 85 bis 75 Gew.%.

Die Summe des Elastomeranteils der Pfropfgrundlagen der Pfropfmischpolymerisate $b_{11}$ und $b_{21}$ soll, bezogen auf B, 10 bis 25 Gew.%, insbesondere 15 bis 21 Gew.% betragen, wobei das Gewichtsverhältnis der Elastomergehalte aus $B_1$ und $B_2$ im Bereich von 95:5 bis 55:45, bevorzugt von 85:15 bis 60:40 liegt. Insbesondere soll der Gesamtelastomergehalt aus $B_1$ und $B_2$, bezogen auf die Summe der Komponenten A und B, kleiner als 9,5 Gew.% sein bei einem Gewichtsverhältnis der Pfropfkautschuke $b_{11}$:$b_{21}$ von größer als 1,5.

Herstellung von $B_1$

$B_1$ ist die, mindestens ein feinteiliges, in Emulsion erzeugtes Pfropfmischpolymerisat $b_{11}$ enthaltende Mischung mit der Hartphase $b_{12}$.

$b_{11}$:

Als Pfropfmischpolymerisat $b_{11}$ wird ein Emulsionspfropfcopolymerisat verwendet, das eine Hartphase als Pfropfreis und eine Elastomerphase als Pfropfgrundlage aufweist. Die Hartphase des Emulsionspfropfmischpolymerisates enthält im wesentlichen mindestens 1 vinylaromatisches Monomeres mit 8 bis 12 C-Atomen und/oder MMA und mindestens ein ethylenisch-ungesättigtes Monomeres. Als ethylenisch-ungesättigte Monomere kommen insbesondere (Meth)Acrylnitril oder Methylmethacrylat oder Mischungen dieser Monomeren in Betracht. Bevorzugt wird AN. Als vinylaromatisches Monomeres wird bevorzugt Styrol verwendet. Es kann jedoch auch Styrol in Mischung mit α-Methylstyrol oder p-Methylstyrol angewendet werden, falls wärmeformbeständigere Produkte gewünscht werden, jedoch ist dies nicht bevorzugt. Zur Herstellung von Formmassen mit hoher Wärmeformbeständigkeit kann (Meth)acrylnitril oder MMA ganz oder teilweise durch Maleinsäureanhydrid oder N-substituierte Maleinimide ersetzt werden.

Die Elastomerphase ist ein Homo- oder Copolymerisat, das im wesentlichen aus einem aliphatischen Dien mit 4 bis 5 C-Atomen aufgebaut ist oder zusätzlich zu diesem(n) mindestens ein Monomeres eines Acrylsäurealkylesters mit 2 bis 8 C-Atomen im Alkylrest oder Styrol oder Acrylnitril in Mengen bis 30 Gew.% enthält oder überwiegend oder ausschließlich aus mindestens einem Monomeren eines Acrylsäurealkylesters mit 2 bis 8 C-Atomen im Alkylrest aufgebaut ist. Die überwiegend Acrylat enthaltende Kautschuke können bis zu 30 Gew.%, bezogen auf Kautschukgewicht, Monomere wie Vinylacetat, Acrylnitril, Styrol, Methylmethacrylat und/oder Vinylether copolymerisiert enthalten.

Die Acrylatkautschuke können weiterhin kleinere Mengen, vorzugsweise bis zu 5 Gew.%, bezogen auf Kautschukgewicht, vernetzend wirkender, ethylenisch ungesättigter Monomerer enthalten. Solche Vernetzer sind zum Beispiel Alkylendioldi(meth)-acrylate, Polyesterdi-(meth)-acrylat, Divinylbenzol, Tri-Vinylbenzol, Triallylcyanurat, Tricyclodecenylacrylat, Allyl-(meth)-acrylat, Butadien oder Isopren. Solche Acrylatkautschuke sind bekannt. Acrylatkautschuke als Pfropfgrundlage können auch Produkte sein, die zweistufig aufgebaut sind, und die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril als Kern enthalten. Andere geeignete Kautschuke sind z.B. EPDM-Kautschuke, also Kautschuke aus Ethylen, Propylen und einem unkonjugierten Dienmonomer.

Die Verwendung nur von aliphatischen Dienen als Monomer in der Pfropfgrundlage bewirkt im wesentlichen eine positive Beeinflussung der Tieftemperaturzähigkeit und des Oberflächenglanzes der Formmassen.

Die Anwendung von überwiegend oder ausschließlich einem Acrylsäurealkylester in der Pfropfgrundlage bewirkt gute Alterungs- und Witterungsbeständigkeit sowie gute Beständigkeit gegen Verfärbung und gegen Temperaturbelastung bei thermoplastischer Verarbeitung der Formmasse.

Das Pfropfmischpolymerisat $b_{11}$ wird in üblicher Weise hergestellt durch Pfropfcopolymerisation von 20 bis 60 Gew.%, vorzugsweise 25 bis 50 Gew.%, insbesondere 30 bis 45 Gew.% und sehr speziell von 30 bis 39 Gew.% einer Monomerenmischung aus mindestens einem vinylaromatischen Monomeren mit 8 bis 12 C-Atomen, MMA oder Mischungen daraus und einem ethylenisch-ungesättigten Monomeren in einer wäßrigen Emulsion von 80 bis 40 Gew.%, vorzugsweise 75 bis 50 Gew.%, insbesondere 70 bis 55 Gew.% und ganz besonders von 70 bis 61 Gew.% eines kautschukartigen Polymerisats. Bevorzugt wird als vinylaromatisches Monomeres Styrol, gegebenenfalls allerdings weniger bevorzugt in Mischung mit α-Methylstyrol angewendet. Als ethylenisch-ungesättigtes Monomeres kommt insbesondere (Meth)acrylnitril und Methylmethacrylat in Betracht. Zur Herstellung von Formmassen mit hoher Wärmeformbeständigkeit kann (Meth)acrylnitril oder MMA ganz oder teilweise durch Maleinsäureanhydrid oder N-substituierte Maleinimide ersetzt werden. Als kautschukartiges Polymerisat, das die Pfropfgrundlage bildet, wird besonders bevorzugt Polybutadien als Emulsionspolymerisat mit einem cis-Gehalt von 20 bis 30, und einem 1,2-Vinylgehalt von 18 bis 25 und etwa 55 % 1,4-trans-Konfiguration. Anstelle des Diens kann jedoch auch ein Monomeres eines Acrylsäurealkylesters mit 2 bis 8 C-Atomen im Alkylrest angewendet werden. Außerdem bevorzugt ist Acrylsäurebutylester und der 2-Ethylhexlacrylsäureester. Es können jedoch auch Copolymerisate aus Acrylestern mit bis zu 60 Gew.% Butadien zur Anwendung gelangen. Das Gewichtsverhältnis der das Pfropfreis bildenden Monomeren Styrol zu AN kann im Bereich von 45 zu 55 (bei Verwendung von MMA) bzw. von 50 zu 50 (bei Einsatz von AN) bis 95 zu 5 liegen; vorzugsweise liegt das Verhältnis im Bereich 60:40 bis 90:10 und insbesondere im Bereich von 65:35 bis 80:20 liegen. Die Pfropfpolymerisation wird dabei so durchgeführt, daß zu einer wäßrigen Emulsion des Polybutadien- oder Acrylester-Polymeren

bzw. des Copolymeren aus diesen Bestandteilen eine Monomerenmischung der das Pfropfreis bildenden Monomeren im vorstehend genannten Gewichtsverhältnis zugegeben wird. Bei der Pfropfung können dabei gegebenenfalls weiter Emulgatoren zugesetzt werden. Die Polymerisation wird durch radikalbildende Initiatoren, wie Azoverbindungen oder Peroxide, ausgelöst. Die Polymerisationstemperatur kann zwischen 30 und 100 °C liegen. Für die Durchführung der Polymerisation können übliche Hilfsstoffe wie Regler und Stabilisatoren zugegen sein.

Die als Pfropfgrundlage für das Pfropfmischpolymerisat $b_{11}$ dienenden Elastomerteilchen weisen eine mittlere Teilchengröße im Bereich von 0,05 bis 0,5 µm ($d_{50}$-Wert der integrierten Masseverteilung) vorzugsweise von 0,1 bis 0,45 µm auf. Sie kann monomodal oder bimodal aufgebaut sein, d.h. 2 Anteile von Teilen im Bereich von 0,05 bis 0,18 µm und 0,25 bis 0,5 µm aufweisen, wie dies in (6) beschrieben ist.

Es ist auch möglich, mit Hilfe der Saatlatexfahrweise die bimodale Verteilung der Partikel der Elastomerphase der Pfropfgrundlage des Pfropfmischpolymerisates $b_{11}$ zu erzeugen. Jedoch ist eine solche Präparation zeitaufwendiger, da zusätzlich ein Saatlatex und danach vergrößerte Teilchen hergestellt werden müssen und die Polymerisation von Butadien auf einen Saatlatex zur Herstellung größerer Teilchen sehr lange Reaktionszeiten erfordert. Der Aufbau von $b_{11}$ muß sich nicht auf eine einfache Kern-Schale-Struktur beschränken. Vielmehr kann auch ein mehrstufiger Aufbau von Vorteil sein (Zwei-, Drei- und Mehrstufenpfropfung). So kann beispielsweise zunächst ein Teil der vinylaromatischen Monomeren und anschließend in einem weiteren Schritt eine Mischung aus vinylaromatischen Monomeren und ethylenisch ungesättigten Monomeren aufgepfropft werden.

$b_{12}$:

Das Copolymerisat $b_{12}$ ist aus Monomeren, die eine harte Phase bilden, aufgebaut. Es kann auf üblichem Wege durch Polymerisieren eines vinylaromatischen Monomeren mit 8 bis 12 C-Atomen, MMA oder Mischungen daraus in Anteilen von 95 bis 50 Gew.%, insbesondere 80 bis 65 Gew.%, in Mischung mit einem ethylenisch ungesättigten Vinylmonomeren wie (Meth)Acrylnitril, in Anteilen von 50 bis 5, insbesondere von 35 bis 20 Gew.% oder von MMA in Anteilen von 20 bis 55 % hergestellt werden. Als vinylaromatisches Monomeres kommen Styrol sowie die Alkylstyrole, hierbei insbesondere das α-Methylstyrol oder das p-Methylstyrol, in Frage. α-Methylstyrol wird vorwiegend dann eingesetzt, wenn hohe Wärmeformbeständigkeit der Formmassen eingestellt werden soll. Üblicherweise werden für diesen Zweck Mischungen von Styrol und Acrylnitril mit bis zu 30 Gew.% α-Methylstyrol angewendet. Bevorzugt werden Copolymerisate angewendet, die 20 bis 35 Gew.% Acrylnitril und 80 bis 65 Gew.% Styrol enthalten. Zur Herstellung von Formmassen mit hoher Wärmeformbeständigkeit kann (Meth)acrylnitril oder MMA ganz oder teilweise durch Maleinsäureanhydrid oder N-substituierte Maleinimide ersetzt werden. Diese Copolymerisate sind im Handel erhältlich und können z.B. der Lehre der DE-AS 10 01 001 bzw. nach der Lehre der DE-PS 10 03 436 hergestellt werden. Der Molekulargewichtsbereich des Copolymerisats beträgt von 80 000 bis 250 000 (Gewichtsmittel $\overline{M}_w$ aus Lichtstreuung.

Das Copolymerisat $b_{12}$ zeigt vorzugsweise den gleichen Aufbau wie die Pfropfhülle des korrespondierenden Pfropfmischpolymerisates $b_{11}$. Bei der Herstellung von $b_{11}$ entstehen in der Regel ungepfropfte Anteile der Hülle, die löslich sind und der Komponente $b_{11}$, als kohärenter Bestandteil zugerechnet werden.

Das Copolymerisat $b_{12}$ stellt also seinerseits eine Mischung dar und kann, insbesondere wenn in Masse oder Lösung hergestellte Handelsprodukte mitverwendet werden, auch von der Hülle unterschiedliche Zusammensetzung und unterschiedliches Molgewicht aufweisen.

Herstellung von $B_2$

$B_1$ ist eine, mindestens ein grobteiliges, in Masse (Lösung) oder Masse-Suspension erzeugtes Pfropfmischpolymerisat $b_{21}$ enthaltende Mischung mit der zugehörigen Hartphase $b_{22}$. $B_1$ wird vorzugsweise in Lösung hergestellt. Die Herstellung ist bekannt und z.B. in (6) hinreichend beschrieben.

Die Herstellung von $b_{21}$ und $b_{22}$ erfolgt gleichzeitig in einem Schritt, wobei eine Pfropfausbeute von 5 bis 30 %, vorzugsweise von 5 bis 20 %, eingestellt wird. Unter Pfropfausbeute wird das Gewichtsverhältnis der tatsächlich aufgepfropften Pfropfmonomeren zu den insgesamt verwendeten Pfropfmonomeren x 100 verstanden. Hierzu werden 100 Gew.-Teile einer Mischung aus mindestens einem vinylaromatischen Monomeren mit 8 bis 12 C-Atomen, MMA oder Mischungen davon und (Meth)acrylnitril oder MMA im Gewichtsverhältnis 50:50 bis 95:5, vorzugsweise 60:40 bis 90:10 und insbesondere 65:35 bis 80:20 in Gegenwart von 3 bis 33 Gew.-Teilen, vorzugsweise 4 bis 21 Gew.-Teilen, insbesondere 6 bis 14 Gew.-

Teilen und vorzugsweise 6 bis 10 Gew.-Teilen eines Elastomeren in Masse, vorzugsweise zusätzlich in Gegenwart eines inerten Lösungsmittels, oder in Masse-Suspension in an sich bekannter Weise polymerisiert, so daß danach der mittlere Teilchendurchmesser der resultierenden Teilchen aus der Pfropfung im Bereich von 0,8 bis 5 µm, vorzugsweise 1,0 bis 2,0 µm, liegt. Bei diesem Prozess entsteht nach Phaseninversion durch Pfropfung und Inklusion eines Teils der Monomeren auf bzw. in das Elastomere das Pfropfmischpolymerisat $b_{21}$. Der restliche Anteil der Monomeren bildet das Copolymerisat $b_{22}$. Das Massenverhältnis von Elastomer zu aufgepfropftem und inkludiertem Monomeren in $b_{21}$ beträgt 4:6 bis 6:4. Die Pfropfausbeute (das Verhältnis von aufgepfropften zu Gesamtmenge der Monomeren) beträgt 5 bis 30 %, vorzugsweise 5 bis 20 %.

Die vinylaromatischen Monomeren sind dieselben, die auch bei der Herstellung von $b_{11}$ Verwendung finden. Vorzugsweise wird lediglich Styrol zusammen mit Acrylnitril angewendet. Als Lösungsmittel kommen z.B. in Frage Cyclohexan oder Alkylaromaten, insbesondere Ethylbenzol.

Als Elastomeres kommt vorzugsweise Polybutadien mit cis-Gehalten von 30 bis 40 % und 1,2-Vinylgehalten von 7 bis 14 % in Frage. Es können auch Copolymerisate von Butadien mit 15 bis 40 Gew.% aus vinylaromatischen Monomeren, insbesondere Styrol, angewendet werden. Ferner können auch Gemische aus Polybutadien- und Styrol-Butadienblock-Kautschuken angewendet werden. Eine bevorzugte Arbeitsweise zur Herstellung des Pfropfmischpolymerisates $b_{21}$ ist in der DE-OS 14 95 089 beschrieben.

Sofern die ungepfropften Anteile der bei der Herstellung der Pfropfmischpolymerisate $b_{11}$ bzw. $b_{21}$ nicht ausreichen, um die Mischungen $B_1$ bzw. $B_2$ zu erzielen, das ist in der Regel der Fall, müssen separat hergestellte Copolymerisate der unter $b_{12}$ bzw. $b_{22}$ genannten Zusammensetzung zugesetzt werden.

Die Zusammensetzung der Pfropfhüllen von $b_{11}$ und $b_{21}$ und der Copolymeren $b_{12}$ und $b_{22}$ kann gleich oder verschieden sein.

Komponente C

Die erfindungsgemäße Formmasse kann als Komponente C Zusatzstoffe enthalten, die für Polycarbonate, SAN-Polymerisate und Pfropfmischpolymerisate auf Basis von ABS etc. oder deren Mischungen typisch und gebräuchlich sind. Als solche Zusatzstoffe seien beispielsweise genannt: Füllstoffe - insbesondere Glas- und Kohlenstoffasern -, sowie Materialien zur Erhöhung der Abschirmung von elektromagnetischen Wellen (z.B. Metallflocken, -pulver, -fasern, metallbeschichtete Füllstoffe), Farbstoffe, Pigmente, Antistatika, Antioxidantien, Stabilisatoren, auch Flammschutzmittel und insbesondere die Schmiermittel, die für die Weiterverarbeitung der Formmasse, z.B. bei der Herstellung von Formkörpern bzw. Formteilen erforderlich sind. Von den Schmiermitteln sind insbesondere diejenigen auf Basis von N,N'-Bisstearylethylenamin (Accrawachs) zu nennen, die bevorzugt angewendet werden, um die Verarbeitungseigenschaften der Formmassen auf einem hohen Niveau zu halten. Diese sind überraschenderweise besser geeignet als Silikonöle Pluriole® und die Stearate.

Bei den Flammschutzmitteln kann es sich im weitesten Sinne handeln um Halogen-, vorzugsweise Brom, enthaltende nieder- und hochmolekulare (aromatische) Verbindungen, ausgewählt aus den Klassen der Aryle, Arylether, Arylalkylether, Arylamine, Arylimide, Arylanhydride, Phenole, Arylalkylimide und Arylsiloxane. Die folgende Zusammenstellung zeigt charakteristische Beispiele; sie beinhaltet keine Einschränkung:

| | |
|---|---|
| Aryle: | Hexabrombenzol, bromiertes oligomeres Styrol (BOS), Pentabrommethylbenzol; |
| Arylether: | Dekabromdiphenylether, Octabromdiphenylether, Poly(2,6-dibrom-1,4-phenylen)ether; |
| Arylalkylether: | Bis(2,4,6-tribromphenoxi)ethan, Bis(pentabromphenoxi)ethan, Poly(tetrabrombisphenol-A-glycidyl)-ether, Poly(tetrabromhydrochinon-1,2-ethyliden)ether; |
| Arylamine: | Tris(2,4-dibromphenyl)amin, Bis(pentabromphenyl)amin; Tribromanilin; |
| Arylanhydride: | Tetrabromphthalsäureanhydrid; |
| Arylimide: | Tetrabromphthalsäureimid; |
| Arylalkylimide: | Ethylen-bis(tetrabromphthalimid); |
| Phenole: | Tetrabrombisphenol-A; |
| Arylsiloxane: | Tetrakis(2,4,6-tribromphenyl)siloxan; |

Die halogenhaltigen Flammschutzmittel wurden bevorzugt zusammen mit Synergisten wie Antimon-, Wismut- und Phosphorverbindungen eingesetzt. Daneben können auch halogenfreie Flammschutzmittel, insbesondere organische Phosphorverbindungen auch in Kombination mit geringen Mengen an hochfluorierten Polymeren (PTFE) verwendet werden.

Bevorzugt eingesetzt werden:
Octabromdiphenylether, DE 79® von Great Lakes, Poly(2,6-dibrom-1,4-phenylen)ether, PO 64 P® von Great Lakes, Poly(tetrabrombisphenol-A-glycidyl)ether, F 2400® von Makhteshim, Ethylenbis-(tetrabromphthalimid), Saytex BT 93® von Saytech und Bis(2,4,6-tribromphenoxi)ethan, Firemaster FF 680® von Great Lakes.

Besonders bevorzugt ist Poly- bzw. Oligo(tetrabrombisphenol A)-carbonat, BC 52® von Great Lakes und Poly(tetrabrombisphenol-A-glycidyl)ether (F 2400 von Makhteshim).

## Herstellung der Formmasse

Das Mischen der Komponenten A, $B_1$, $B_2$ und gegebenenfalls C kann nach allen bekannten Methoden erfolgen. Vorzugsweise geschieht jedoch das Mischen der Komponenten A, $B_1$, $B_2$ und gegebenenfalls C bei Temperaturen von 200 bis 300 °C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponenten $b_{11}$) können aber auch teilweise entwässert oder direkt als Dispersion mit der Komponente $b_{12}$ zu $B_1$ oder zusätzlich gemeinsam mit $B_2$ zu B vermischt werden. Dabei erfolgt die vollständige Trocknung der Pfropfmischpolymerisate $b_{11}$ während des Vermischens. Anschließend wird $B_1$ mit $B_2$ und dem Polycarbonat bzw. B mit dem Polycarbonat vermischt. Es ist aber auch möglich, die teilweise entwässerte Komponente $b_{11}$ oder deren Dispersion direkt mit $b_{12}$, $B_2$, dem Polycarbonat A und der Komponente C zu vermischen, wobei dann während des Vermischens die vollständige Trocknung von $b_{11}$ erfolgt.

Es kann vorteilhaft sein, einzelne Komponenten vorzumischen. Auch das Mischen der Komponenten in Lösung und Entfernen der Lösungsmittel ist möglich.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellten Formmassen Formteile durch Spritzgießen für den Automobilbau hergestellt.

Die in der vorliegenden Anmeldung beschriebenen Parameter werden wie folgt bestimmt:

1. die mittlere Teilchengröße und die Teilchengrößenverteilung der in Emulsion hergestellten Elastomerteilchen wird aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 - (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen können neben dem $d_{50}$-Wert (mittlerer Teilchendurchmesser) die sich aus der integralen Massenverteilung ergebenden $d_{10}$- und $d_{90}$-Werte herangezogen werden. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.% der Teilchen bezogen sind.
Die mittlere Teilchengröße der Elastomerpartikel der in Lösung hergestellten Komponente $B_2$ wurde mittels Elektronenmikroskopie bestimmt (Auszählung).

2. Die Kerbschlagzähigkeit, $a_K$, in [kJ/m$^2$] der Proben wurde nach DIN 53 453 an bei 260 °C gespritzten Normkleinstäben bei 23 °C und -40 °C gemessen.

3. a) Die relative Lösungsviskosität $\eta_{rel.}$, des eingesetzten Polycarbonats wurde in einer 0,5 %igen Lösung in Methylenchlorid bei 23 °C gemessen;
b) die Viskositätszahl, VZ, der SAN-Copolymerisate in 0,5 %iger in Dimethylformamid bei 23 °C.

4. Die Durchstoßarbeit, $W_{ges}$, im Plastechontest (Nm), wurde nach DIN 53 453 an bei 270°C spritzgegossenen 2 mm dicken Rundscheiben bestimmt. Die Prüfung erfolgte bei Raumtemperatur (23°C) und -40°C.

5. Der Glanz wurde an 2 mm dicken 60 mm Rundscheiben mittels eines Labor-Reflektometers der Fa. Lange bei einem Einfallswinkel von 45° gemessen. Diese Art der Glanzmessung ist eine Relativmessung. Seine Einheit wird in Skalenteilen (SKT), bezogen auf einen von der Fa. Lange mitgelieferten Standard angegeben. Als Bedingungen für den Spritzguß wurden eine Masse-(Kunststoff)-Temperatur von 260°C, eine Formtemperatur von 80°C und eine Einspritzzeit von 0,6 s gewählt.

6. Der Schmelzindex MFI wird nach DIN 53 735 bei einer Temperatur von 260°C und 5 kp Belastung ermittelt. (Die Einheit ist g/10 Min.).

7. Vicat B Wert wurde nach DIN 53 460 bestimmt.

8. Die Witterungsstabilität wurde an 2 mm dicken Rundscheiben (60 mm Durchmesser) geprüft. Diese wurden in einem Xenontestgerät 1200 der Firma Heraeus bei 45°C bestrahlt und anschließend die Durchstoßarbeit (wie unter 4) bei Raumtemperatur bestimmt. Der Schlag erfolgt dabei auf die unbelichtete Seite. Die als Maß für die Bewitterungsstabilität angegebene Zeit ist diejenige, bei der die Durchstoßarbeit auf 40 % ihres ursprünglichen Wertes abgefallen ist.

Für die Herstellung erfindungsgemäßer Formmassen und Massen für Vergleichsversuche wurden die nachfolgend beschriebenen Produkte verwendet.

Komponente A

Als Komponente A wurde ein handelsübliches Polycarbonat auf Basis von Bisphenol A mit einer relativen Lösungsviskosität von 1,30 ml/g eingesetzt.

Komponente B

Es wurden die im folgenden beschriebenen Pfropfmischpolymerisate eingesetzt.

$b_{11A}$ Durch Polymerisation von 62 Teilen Butadien in Gegenwart einer Lösung von 0,6 Teilen tert.-Dodecylmercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 25°C ein Polybutadienlatex hergestellt. Nach Beendigung der Reaktion wird der Polymerisationsautoklav entspannt. Der Umsatz betrug 98 %.
Es wird ein Polybutadien erhalten, dessen mittlere Teilchengröße bei 0,1 µm liegt. Der erhaltene Latex wurde durch Zusatz von 25 Teilen einer Emulsion, eines Copolymeren aus 96 Teilen Ethylacrylat und 4 Teilen Methacrylsäureamid mit einem Feststoffgehalt von 10 Gewichtsteilen agglomeriert, wobei ein Polybutadienlatex mit einer mittleren Teilchengröße von 0,35 µm entstand. Nach Zusetzen von 40 Teilen Wasser, 0,4 Teilen Na-$C_{14}$-Alkylsulfonat und 0,2 Teilen Kaliumperoxodisulfat wurden 38 Teile einer Mischung aus Styrol und Acrylnitril im Verhältnis 70:30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

$b_{11B}$ Ein Emulsionspolymerisat, das wie $b_{11A}$ hergestellt wurde, mit der Maßgabe 65 Gew.-Teile des S/AN-Gemisches und nur 35 Teile des Pbu-Latex angewendet wurden.

$b_{11C}$ Ein Emulsionspolymerisat, das wie $b_{11A}$ hergestellt wurde, wobei jedoch 84 Teile des S/AN-Gemisches und 16 Teile Pbu-Latex verwendet wurden.

$B_2$ Polybutadien wird in einer Mischung aus Styrol, Acrylnitril und Ethylbenzol gelöst. Das Styrol/Acrylnitril-Verhältnis beträgt 75/25 Gew.%). Die Mischung wird unter starkem Rühren in einem kontinuierlichen Prozeß in drei hintereinander angeordneten Reaktoren mit steigendem Temperaturprofil polymerisiert. Während der Polymerisation polymerisiert ein Teil des Styrol/Acrylnitril-Gemisches auf das Polybutadien und bildet das Pfropfpolymere $b_{21}$, während der restliche Anteil das Copolymere $b_{22}$ bildet. Das Polymerisationsprodukt wurde entgast, extrudiert und anschließend granuliert.
Folgende Analysedaten wurden gefunden: 9,3 % Polybutadien, 68 % Polystyrol, 22,7 % Acrylnitril. Die Propfausbeute beträgt 8,5 %.

Der durch Auszählung der Teilchen auf den elektronenmikroskopischen Aufnahmen bestimmte mittlere Durchmesser beträgt 1,4 µm.

Somit erhält das Produkt 17 % des grobteiligen Pfropfkautschuks $b_{21}$ und 83 % des Copolymeren $b_{22}$

mit einer VZ von 84 ml/g.

Als Hartmatrix, entsprechend Komponente $b_{12}$ des Anspruchs, wurde ein S/AN-Copolymerisat (S/AN = 75:25) der VZ = 82 verwendet, in der Tabelle 1 als Y bezeichnet.

Komponente C

$C_1$ Es wurde ein aus 10 Gew.% Ethylenoxid und 90 Gew.% Propylenoxid aufgebautes symmetrisches Dreiblockcopolymerisat XYX mit dem Molgewicht 2800 des Mittelblocks als Schmiermittel verwendet (Pluriol® 3100).

$C_2$ Als weiteres Schmiermittel diente N,N'-Bisstearylethylendiamin (Accrawachs).

Die Erfindung wird durch die nachfolgenden Beispiele näher erläutert. Die in den Beispielen genannten Teile und Prozente beziehen sich, sofern nicht anders angegeben, auf das Gewicht.

Beispiele 1 bis 6 und Vergleichsversuche I bis VII

Die in der Tabelle 1 angegebenen Gewichtsteile der Komponenten A und B ($b_{11A}$ bis $B_2$) wurden in trockener Form mit zusätzlich jeweils 0,75 Teilen Pluriol® PE 3100 oder 1 Teil Accrawachs auf einem Fluidmischer gemischt und bei 260 °C auf einen Doppelschneckenextruder, z.B. ZSK-Typ von Werner & Pfleiderer, extrudiert. Aus dem getrockneten Granulat der Proben wurden die Formkörper für die Eigenschaftsprüfungen durch Spritzgießen hergestellt.

In Tabelle 2 sind die Ergebnisse der Formmassen dargestellt. In den Vergleichsversuchen I und VI wurden zwei unterschiedliche Emulsionspfropfkautschuke (unterschiedlicher Pfropfgrad) gemäß der Lehre der EP 80 707 eingesetzt. Die mechanischen Werte sind gut, jedoch ist die Fließfähigkeit unbefriedigend.

In einigen Versuchen wurde Pluriol durch Accrawachs ersetzt (vgl. z.B. Vergleichsversuch I mit VII). Dies führt zu einer leichten Anhebung der Vicat-Temperatur und des MFI. In der erfindungsgemäßen Abmischung (vgl. Beispiel 5, mit Versuch I) steigt die Fließfähigkeit an. Gut fließende Mischungen erhält man überraschenderweise mit Accrawachs (Beispiel 6). Die mechanischen Eigenschaften bleiben unbeeinflußt.

Die erfindungsgemäßen Mischungen besitzen sowohl gute Fließfähigkeit und Zähigkeit als auch hohen Glanz (trotz Zusatz von LABS) und verbesserte Witterungsstabilität.

Tabelle 1

| Beispiele | Komponente A | Komponente B | | | | | Komponente C | | Elastomerengehalt | |
|---|---|---|---|---|---|---|---|---|---|---|
| | Teile | $B_1$ | | | | $B_2$ | Art | Teile | $B_1 + B_2$ bezogen auf B | E-Verhältnis $B_1/B_2$ |
| | | Art | Teile | Art | Teile | Teile | | | | |
| 1 | 40 | $b_{11A}$ | 15 | Y | 22,5 | 22,5 | $C_1$ | 0,75 | 18,9 | 82/18 |
| 2 | 30 | " | 17,5 | " | 26,5 | 26 | $C_1$ | 0,75 | 18,9 | 82/18 |
| 3 | 60 | " | 10 | " | 20 | 10 | $C_1$ | 0,75 | 17,8 | 87/13 |
| 4 | 60 | " | 10 | " | 15 | 15 | $C_1$ | 0,75 | 18,9 | 82/18 |
| 5 | 60 | " | 10 | " | 10 | 20 | $C_1$ | 0,75 | 20,2 | 77/23 |
| 6 | 60 | " | 10 | " | 10 | 20 | $C_2$ | 1,0 | 20.2 | 77/23 |
| Vergleichsversuche | | | | | | | | | | |
| I* | 60 | $b_{11A}$ | 18 | Y | 22 | - | $C_1$ | 0,75 | 27,9 | |
| II | 60 | $b_{11A}$ | 10 | Y | 30 | - | $C_1$ | 0,75 | 15,5 | |
| III | 60 | - | | - | | 40 | $C_1$ | 0,75 | 9,3 | 0 |
| IV | 40 | - | | - | | 60 | $C_1$ | 0,75 | 9,3 | 0 |
| V | 50 | $b_{11B}$<br>$b_{11C}$ | 16<br>10 | Y | 24 | - | $C_1$ | 0,75 | 14,4 | |
| VI* | 70 | $b_{11B}$ | 10 | Y | 15 | - | $C_1$ | 0,75 | 14,3 | |
| VII | 60 | $b_{11A}$ | 18 | Y | 22 | | $C_2$ | 1,0 | 26,1 | |

* gemäß Lehre der EP 80 767

Tabelle 2

| Beispiele | MFI | $A_K$ | | $W_{ges}$ | | Glanz SKT | Vicat °C | Bewitterungsstabilität / h |
|---|---|---|---|---|---|---|---|---|
| | | 23 °C | -40 °C | 23 °C | - 40 °C | | | |
| 1 | | 30 | 15 | 42 | 25 | - | | 15 |
| 2 | | 27 | 13 | 35 | 26 | - | | 12,5 |
| 3 | 16 | 48 | 11 | 60 | 58 | 75 | | 14 |
| 4 | 15 | 48 | 17 | 60 | 60 | 73 | | 13 |
| 5 | 14 | 44 | 21 | 58 | 61 | 70 | | 14 |
| 6 | 21 | 41 | - | - | - | | 120,6 | 14,5 |
| Vergleichsversuch | | | | | | | | |
| I | 10 | 46 | 19 | 54 | 50 | 73 | 118,5 | 10 |
| II | 17 | 34 | 6 | 60 | 50 | | | 8 |
| III | 30 | 38 | 7 | 52 | 49 | 49 | | 14 |
| IV | 35 | 20 | 4 | 30 | 16 | | | |
| V | 7 | 38 | 10 | - | - | - | | |
| VI | 10 | 48 | 9 | - | - | - | | 7,5 |
| VII | 12 | 44 | - | - | - | - | 120,1 | |

**Ansprüche**

1. Thermoplastische Formmasse, enthaltend, jeweils bezogen auf die Formmasse aus A + B,

A 30 bis 80 Gew.% mindestens eines Polycarbonates

B 70 bis 20 Gew.% einer Mischung aus zwei unterschiedlichen Komponenten $B_1$ und $B_2$ die jweils aus mindestens einem Pfropfmischpolymerisat $b_{11}$ und $b_{21}$ und jeweils mindestens aus einem Copolymerisat (Hartmatrix) $b_{12}$ bzw. $b_{22}$ bestehen, wobei das Pfropfmischpolymerisat $b_{11}$ in Emulsion und das Pfropfmischpolymerisat $b_{21}$ auf anderem Wege hergestellt ist,

dadurch gekennzeichnet, daß die Komponente $B_1$, bezogen auf B, 20 bis 80 Gew.% ausmacht und, bezogen auf $B_1$, 20 bis 60 Gew.% des Pfropfmischpolymerisates $b_{11}$ und 80 bis 40 Gew.% des Copolymerisates $b_{12}$ enthält,

wobei das Pfropfmischpolymerisat $b_{11}$ durch Emulsionspolymerisation von 20 bis 60 Gew.-Teilen eines Gemisches von mindestens einem vinylaromatischen Monomeren mit 8 bis 12 C-Atomen, MMA oder Mischungen daraus und (Meth)acrylnitril oder MMA im Gewichtsverhältnis 50:50 bis 95:5 auf 80 bis 40 Gew.-Teilen eines in Emulsion gewonnenen Latex eines Elastomeren (Kautschuks) hergestellt wird, dessen Teilchen einen mittleren Durchmesser von 0,05 bis 0,5 µm ($d_{50}$-Wert der Masseverteilung) aufweisen

und wobei

das Copolymerisat $b_{12}$, bezogen auf $b_{12}$, 50 bis 95 Gew.% mindestens eines vinylaromatischen Monomeren mit 8 bis 12 C-Atomen, MMA oder Mischungen daraus und 50 bis 5 Gew.% (Meth)acrylnitril oder MMA einpolymerisiert enthält,

ferner gekennzeichnet dadurch, daß die Komponente $B_2$, bezogen auf B, 80 bis 20 Gew.% ausmacht, und, bezogen auf $B_2$, 5 bis 35 Gew.% des Pfropfmischpolymerisates $b_{21}$ und 95 bis 65 Gew.% des Copolymerisates $b_{22}$ enthält,

wobei das Pfropfmischpolymerisat $b_{21}$ und das Copolymere $b_{22}$ gleichzeitig durch Polymerisation von 100 Gew.-Teilen einer Mischung aus mindestens einem vinylaromatischen Monomeren mit 8 bis 12 C-Atomen, MMA oder Mischungen daraus und (Meth)acrylnitril oder MMA im Gewichtsverhältnis 50:50 bis 95:5 in Gegenwart von 3 bis 33 Gew.-Teilen eines Elastomeren in Masse, oder gegebenenfalls zusätzlich in Gegenwart eines Lösungsmittels, oder in Masse-Suspension hergestellt wird, so daß danach der mittlere Teilchendurchmesser der resultierenden Teilchen aus der Pfropfung im Bereich von 0,8 bis 5 µm liegt,

und wobei das Copolymerisat $b_{22}$, bezogen auf $b_{22}$, 50 bis 95 Gew.% mindestens eines vinylaromatischen Monomeren mit 8 bis 12 C-Atomen, MMA oder Mischungen daraus und 50 bis 5 Gew.% (Meth)acrylnitril oder MMA einpolymerisiert enthält,

mit der Maßgabe, daß der Gesamtelastomergehalt aus $B_1$ und $B_2$, bezogen auf B, 10 bis 25 Gew.% beträgt bei einem Gewichtsverhältnis der Elastomergehalte von 95:5 bis 55:45 für $B_1:B_2$.

2. Thermoplastische Formmasse nach Anspruch 1, enthaltend, jeweils bezogen auf die Formmasse aus A + B,

A 40 bis 70 Gew.% mindestens eines Polycarbonates

B 60 bis 30 Gew.% einer Mischung aus zwei unterschiedlichen Komponenten $B_1$ und $B_2$ die jweils aus mindestens einem Pfropfmischpolymerisat $b_{11}$ und $b_{21}$ und jeweils mindestens aus einem Copolymerisat (Hartmatrix) $b_{12}$ bzw. $b_{22}$ bestehen, wobei das Pfropfmischpolymerisat $b_{11}$ in Emulsion und das Pfropfmischpolymerisat $b_{21}$ auf anderem Wege hergestellt ist,

dadurch gekennzeichnet, daß die Komponente $B_1$, bezogen auf B, 40 bis 80 Gew.% ausmacht und, bezogen auf $B_1$, 25 bis 55 Gew.% des Pfropfmischpolymerisates $b_{11}$ und 75 bis 45 Gew.% des Copolymerisates $b_{12}$ enthält,

wobei das Pfropfmischpolymerisat $b_{11}$ durch Emulsionspolymerisation von 25 bis 50 Gew.-Teilen eines Gemisches von mindestens einem vinylaromatischen Monomeren mit 8 bis 12 C-Atomen, MMA oder Mischungen daraus und (Meth)acrylnitril oder MMA im Gewichtsverhältnis 60:40 bis 90:10 auf 75 bis 50 Gew.-Teilen eines in Emulsion gewonnenen Latex eines Elastomeren (Kautschuks) hergestellt wird, dessen Teilchen einen mittleren Durchmesser von 0,05 bis 0,5 µm ($d_{50}$-Wert der Masseverteilung) aufweisen

und wobei

das Copolymerisat $b_{12}$, bezogen auf $b_{12}$, 60 bis 90 Gew.% mindestens eines vinylaromatischen Monomeren mit 8 bis 12 C-Atomen, MMA oder Mischungen daraus und 40 bis 10 Gew.% (Meth)acrylnitril oder MMA einpolymerisiert enthält,

ferner gekennzeichnet dadurch, daß die Komponente $B_2$, bezogen auf B, 60 bis 20 Gew.% ausmacht, und, bezogen auf $B_2$, 10 bis 30 Gew.% des Pfropfmischpolymerisates $b_{21}$ und 90 bis 70 Gew.% des Copolymerisates $b_{22}$ enthält,

wobei das Pfropfmischpolymerisat $b_{21}$ und das Copolymere $b_{22}$ gleichzeitig durch Polymerisation von 100 Gew.-Teilen einer Mischung aus mindestens einem vinylaromatischen Monomeren mit 8 bis 12 C-Atomen, MMA oder Mischungen daraus und (Meth)acrylnitril oder MMA im Gewichtsverhältnis 60:40 bis 90:10 in Gegenwart von 4 bis 21 Gew.-Teilen eines Elastomeren in Masse, oder gegebenenfalls zusätzlich in Gegenwart eines Lösungsmittels, oder in Masse-Suspension hergestellt wird, so daß danach der mittlere Teilchendurchmesser der resultierenden Teilchen aus der Pfropfung im Bereich von 0,8 bis 5 µm liegt,

und wobei das Copolymerisat $b_{22}$, bezogen auf $b_{22}$, 60 bis 90 Gew.% mindestens eines vinylaromatischen Monomeren mit 8 bis 12 C-Atomen, MMA oder Mischungen daraus und 40 bis 10 Gew.% (Meth)acrylnitril oder MMA einpolymerisiert enthält,

mit der Maßgabe, daß der Gesamtelastomergehalt aus $B_1$ und $B_2$, bezogen auf B, 15 bis 21 Gew.% beträgt bei einem Gewichtsverhältnis der Elastomergehalte von 85:15 bis 60:40 für $B_1$:$B_2$.

3. Thermoplastische Formmasse nach Anspruch 1, enthaltend, jeweils bezogen auf die Formmasse aus A + B,

A 40 bis 70 Gew.% mindestens eines Polycarbonates

B 60 bis 30 Gew.% einer Mischung aus zwei unterschiedlichen Komponenten $B_1$ und $B_2$ die jweils aus mindestens einem Pfropfmischpolymerisat $b_{11}$ und $b_{21}$ und jeweils mindestens aus einem Copolymerisat (Hartmatrix) $b_{12}$ bzw. $b_{22}$ bestehen, wobei das Pfropfmischpolymerisat $b_{11}$ in Emulsion und das Pfropfmischpolymerisat $b_{21}$ auf anderem Wege hergestellt ist,
dadurch gekennzeichnet, daß die Komponente $B_1$, bezogen auf B, 50 bis 75 Gew.% ausmacht und, bezogen auf $B_1$, 25 bis 50 Gew.% des Pfropfmischpolymerisates $b_{11}$ und 75 bis 50 Gew.% des Copolymerisates $b_{12}$ enthält,
wobei das Pfropfmischpolymerisat $b_{11}$ durch Emulsionspolymerisation von 30 bis 45 Gew.-Teilen eines Gemisches von mindestens einem vinylaromatischen Monomeren mit 8 bis 12 C-Atomen, MMA oder Mischungen daraus und von (Meth)Acrylnitril oder MMA im Gewichtsverhältnis 65:35 bis 80:20 auf 70 bis 55 Gew.-Teilen eines in Emulsion gewonnenen Latex eines Elastomeren (Kautschuks) hergestellt wird, dessen Teilchen einen mittleren Durchmesser von 0,05 bis 0,5 µm ($d_{50}$-Wert der Masseverteilung) aufweisen

und wobei

das Copolymerisat $b_{12}$, bezogen auf $b_{12}$, 65 bis 80 Gew.% mindestens eines vinylaromatischen Monomeren mit 8 bis 12 C-Atomen oder MMA oder Mischungen daraus und 35 bis 20 Gew.% (Meth)acrylnitril oder MMA einpolymerisiert enthält,

ferner gekennzeichnet dadurch, daß die Komponente $B_2$, bezogen auf B, 50 bis 25 Gew.% ausmacht, und, bezogen auf $B_2$, 15 bis 25 Gew.% des Pfropfmischpolymerisates $b_{21}$ und 85 bis 75 Gew.% des Copolymerisates $b_{22}$ enthält,

wobei das Pfropfmischpolymerisat $b_{21}$ und das Copolymere $b_{22}$ gleichzeitig durch Polymerisation von 100 Gew.-Teilen einer Mischung aus mindestens einem vinylaromatischen Monomeren mit 8 bis 12 C-Atomen, MMA oder Mischungen davon und (Meth)acrylnitril oder MMA im Gewichtsverhältnis 65:35 bis 80:20 in Gegenwart von 6 bis 14 Gew.-Teilen eines Elastomeren in Masse, oder gegebenenfalls zusätzlich in Gegenwart eines Lösungsmittels, oder in Masse-Suspension hergestellt wird, so daß danach der mittlere Teilchendurchmesser der resultierenden Teilchen aus der Pfropfung im Bereich von 1,0 bis 2,0 µm liegt,

und wobei das Copolymerisat $b_{22}$, bezogen auf $b_{22}$, 65 bis 80 Gew.% mindestens eines vinylaromatischen Monomeren mit 8 bis 12 C-Atomen, MMA oder Mischungen daraus und 35 bis 20 Gew.% (Meth)Acrylnitril oder MMA einpolymerisiert enthält,

mit der Maßgabe, daß der Gesamtelastomergehalt aus $B_1$ und $B_2$, bezogen auf B, 15 bis 21 Gew.% beträgt bei einem Gewichtsverhältnis der Elastomerengehalte von 85:15 bis 60:40 für $B_1$:$B_2$.

4. Formmasse nach Anspruch 3, dadurch gekennzeichnet, daß das Pfropfmischpolymerisat $b_{11}$ durch Emulsionspolymerisation von 30 bis 39 Gew.-Teilen eines Gemisches von mindestens einem vinylaromatischen Monomeren mit 8 bis 12 C-Atomen, MMA oder Mischungen daraus und von (Meth)Acrylnitril oder MMA hergestellt wird und das Pfropfmischpolymerisat $b_{21}$ in Gegenwart von 6 bis 10 Gew.-Teilen des Elastomeren erzeugt wird, mit der Maßgabe, daß der Gesamtelastomergehalt aus $B_1$ und $B_2$, bezogen auf die Summe der Komponenten A und B, kleiner als 9,5 Gew.% ist und das Gewichtsverhältnis der Pfropfkautschuke $b_{11}$:$b_{21}$ größer 1,5 ist.

5. Formmasse nach Anspruch 1, dadurch gekennzeichnet, daß das zur Herstellung des Pfropfmischpolymerisates $b_{11}$ gewonnene Elastomere auf der Basis von Polybutadien, Polyalkylacrylaten mit 2 bis 8 C-Atomen im Alkylester oder Copolymerisaten aus Butadien und den genannten Acrylestern aufgebaut ist, und das zur Herstellung des Pfropfmischpolymerisates $b_{21}$ dienende Elastomere Polybutadien ist.

6. Formmasse nach Anspruch 5, dadurch gekennzeichnet, daß zur Herstellung von $b_{11}$ als Elastomeres ausschließlich Polybutadien verwendet wird.

7. Formmasse nach Anspruch 3, dadurch gekennzeichnet, daß als vinylaromatisches Monomer zur Herstellung von $b_{11}$, $b_{12}$ und $b_{22}$ ausschließlich Styrol und dieses zusammen mit AN verwendet wird.

8. Formmasse nach Anspruch 1, dadurch gekennzeichnet, daß sie, bezogen auf 100 Gew.-Teile A+B, 0,1 bis 40 Gew.-Teile übliche Zusatzstoffe (Komponente C) aufweist.

9. Formmasse nach Anspruch 8, dadurch gekennzeichnet, daß als Zusatzstoff N,N'-Bisstearylethylendiamin (Accrawachs) in Mengen von 0,1 bis 2,5 Gew.-Teilen verwendet wird.

10. Verfahren zur Herstellung einer Formmasse gemäß Anspruch 1 durch an sich bekanntes Mischen der Komponenten A und B und gegebenenfalls C.

11. Verwendung der Formmasse gemäß Anspruch 1 zur Herstellung von Formteilen.

12. Formteile aus Formmassen gemäß Anspruch 1.